(19) Europäisches Patentamt

European Patent Office

Office européen des brevets

(11) Veröffentlichungsnummer: **0 374 437 B1**

(12) **EUROPÄISCHE PATENTSCHRIFT**

(45) Veröffentlichungstag der Patentschrift: **23.12.92**

(21) Anmeldenummer: **89120085.9**

(22) Anmeldetag: **30.10.89**

(51) Int. Cl.⁵: **B60T 8/18**

(54) **Kolbeneinrichtung mit veränderbarer Wirkfläche.**

(30) Priorität: **21.12.88 DE 3842958**

(43) Veröffentlichungstag der Anmeldung:
**27.06.90 Patentblatt 90/26**

(45) Bekanntmachung des Hinweises auf die
Patenterteilung:
**23.12.92 Patentblatt 92/52**

(84) Benannte Vertragsstaaten:
**DE FR GB IT**

(56) Entgegenhaltungen:
**DE-A- 2 551 997**
**DE-A- 3 048 749**
**DE-C- 1 231 584**
**GB-A- 1 029 183**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Deike, Karl-Heinz
Feldstrasse 17
W-3017 Pattensen 5(DE)**
Erfinder: **Kiel, Bernd-Joachim
Barnestrasse 40
W-3050 Wunstorf 1(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

# Beschreibung

Die Erfindung betrifft eine Kolbeneinrichtung mit veränderbarer Wirkfläche, insbesondere für eine lastabhängige Bremskraftregeleinrichtung für Fahrzeugbremsanlagen, gemäß dem Oberbegriff des Patentanspruchs 1.

Eine derartige Kolbeneinrichtung ist beispielsweise aus der DE-PS 1 231 584 bekannt.

Diese bekannte Kolbeneinrichtung ist in einer Bremskraftregeleinrichtung für eine Fahrzeugbremsanlage angeordnet und dient zur Betätigung eines Bremsdruckregelventils, dessen Regelgröße über ein lastabhängig verstellbares Stellglied einstellbar ist.

Der Wirksame Durchmesser und somit die von einem Steuerdruck beaufschlagte Wirkfläche der Membran der Kolbeneinrichtung wird durch mehr oder weniger tiefes Eintauchen der mit einem Steuerglied verbundenen Stützglieder in die Ausnehmungen zwischen im Gehäuse fest angeordneten Stützgliedern verändert. Die vom Steuerdruck beaufschlagte Wirkfläche der Membran wird dabei um den von den im Gehäuse fest angeordneten Stützgliedern abgestützten Bereich der Membran reduziert.

Die Stützglieder des im Gehäuse ortsfest angeordneten Stützelementes sind bei dieser bekannten Bremskraftregeleinrichtung so ausgebildet und so zueinander angeordnet, daß der Abstand zwischen je zwei benachbarten Stützgliedern dieses Stützelementes wenigstens auf der der Membran zugewandten Seite des Stützelementes über den überwiegenden Teil der radialen Erstreckung dieser Stützglieder gleich oder annähernd gleich ist.

Der Abstand zwischen den Stützgliedern des mit dem ortsfest angeordneten zusammenwirkenden bewegbaren Stützelementes vergrößert sich jedoch nach außen hin zunehmend.

Wird das bewegbare Stützelement in Richtung der Längsachse des Relaiskolbens vom ortsfest angeordneten Stützelement wegbewegt und hebt dabei die Membran vom ortsfest angeordneten Stützelement ab, so kann die Membran zwischen den Stützgliedern des bewegbaren Stützelementes in Richtung auf die Stützglieder des ortsfest angeordneten Stützelementes zu ausbeulen, so daß Teilbereiche der Membran in Anlage mit den Stützgliedern des ortsfest angeordneten Stützelementes verbleiben.

Um dies zu verhindern, muß die Bremskraftregeleinrichtung gemäß dieser Schrift so ausgebildet sein, daß das bewegbare Stützelement einen relativ großen Hub ausführt. Dies kann zu einer Überdehnung der Membran führen. Eine Folge daraus kann sein, daß bei einem bestimmten Hub des Steuergliedes eine diesem Hub zugeordnete Vergrößerung der vom Steuerdruck beaufschlagten Wirkfläche der Membran nicht erreicht wird.

Aus der GB-A-1 029 183 ist eine ähnliche Bremskraftregeleinrichtung bekannt, wie sie in der DE-PS 1 231 584 beschrieben wird.

Diese bekannte Bremskraftregeleinrichtung weist ebenfalls ein ortsfest angeordnetes Stützelement und ein mit diesem zusammenwirkendes bewegbares Stützelement auf.

Diese bekannte Bremskraftregeleinrichtung hat jedoch auch den Nachteil, daß der Abstand zwischen den Stützgliedern des bewegbaren Stützelementes sich nach außen hin erweitert, so daß bei einem Hub des bewegbaren Stützelementes die Membran an den Stützgliedern des ortsfest angeordneten Stützelementes ungewollt über einen bestimmten Hub noch in Anlage verbleiben kann, auch wenn dies nicht gewünscht wird. Zudem kann die Membran in ungewollter Weise, wie vorstehend bereits beschrieben, ausbeulen.

Der Erfindung liegt deshalb die Aufgabe zugrunde, eine Kolbeneinrichtung der eingangs erwähnten Art zu schaffen, bei welcher eine unbeabsichtigte Beeinflussung der vom Steuerdruck beaufschlagten Wirkfläche der Membran in Form einer nicht kontrollierbaren Vergrößerung oder Verringerung dieser Wirkfläche weitestgehend verhindert wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine annähernd lineare Flächenänderung der Wirkfläche der Membran zum Verstellhub zu erhalten. Die Flächenänderung der Wirkfläche der Membran wird bereits bei sehr kleinen Hüben des Steuergliedes und somit auch des zweiten Stützelementes (Relativbewegung zwischen dem zweiten Stützelement und dem ersten Stützelement in Richtung ihrer Längsachse) erreicht. Aufgrund des geringeren erforderlichen Verstellhubes wird eine Überdehnung der Membran verhindert.

Bei Einsatz der erfindungsgemäßen Kolbeneinrichtung in einer Bremskraftregeleinrichtung läßt sich eine genauere Bremsdruckregelung erzielen. Aufgrund des geringeren Verstellhubes und einer dadurch erzielten geringeren Dehnung der Membran ist ein geringerer Ansprechdruck erforderlich.

Anhand der Zeichnung werden nachstehend Zwei Ausführungsbeispiele der Erfindung näher erläutert.

Es zeigen:

**Fig. 1**      den eine Kolbeneinrichtung und ein Regelventil beinhaltenden Teil einer lastabhängigen Bremskraftregeleinrichtung;

**Fig. 2**      die beiden Stützelemente einer Kolbeneinrichtung gemäß dem Stand der Technik;

**Fig. 3** das bewegbar angeordnete Stützelement einer Kolbeneinrichtung mit Y-förmig ausgebildeten Stützgliedern;

**Fig. 4** das mit dem bewegbaren Stützelement zusammenwirkende ortsfest angeordnete Stützelement der Kolbeneinrichtung;

**Fig. 5** die in den Figuren 3 und 4 gezeigten Stützelemente im zusammengefügten Zustand und

**Fig. 6** eine Kolbeneinrichtung mit keilförmig ausgebildeten Stützgliedern.

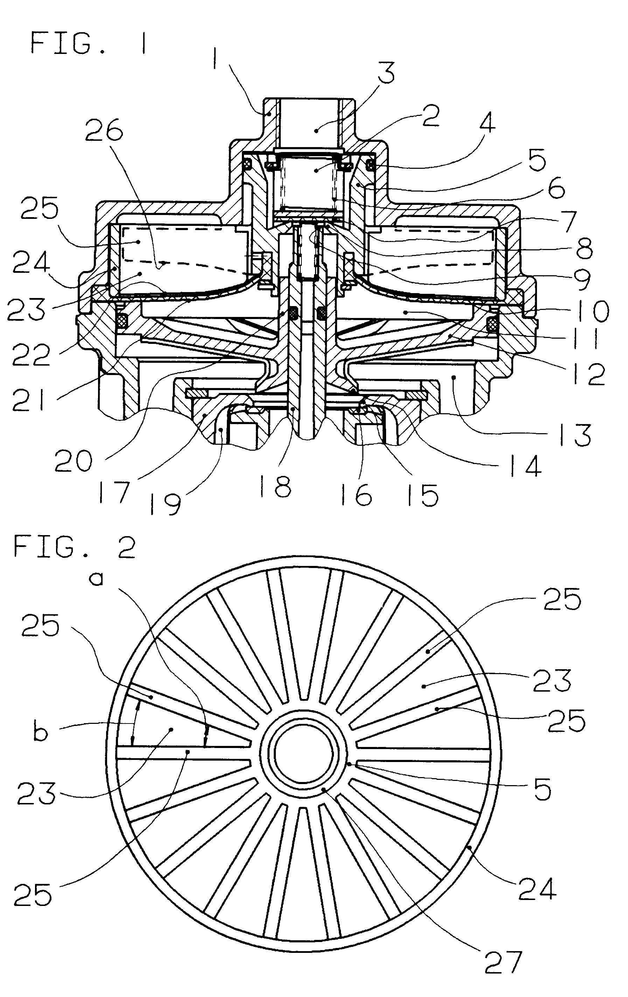

Gemäß Fig. 1 ist in einem Gehäuse (1) eine Kolbeneinrichtung mit veränderbarer Wirkfläche angeordnet. Die Kolbeneinrichtung weist ein als Hohlkörper ausgebildetes Steuerglied (5), welches in diesem Ausführungsbeispiel als ein mittels eines Dichtringes (4) abgedichtet verschiebbares Kolbenteil ausgebildet ist, und eine an diesem befestigte Membran (10) auf. Die Membran (10) ist mit ihrem äußeren Randbereich im Gehäuse (1) eingespannt.

Innerhalb des Kolbenteiles (5) ist ein Doppelventilkörper (7) angeordnet, der unter der Vorspannung einer Feder (6) steht und mit einem am Kolbenteil (5) vorgesehenen Ventilsitz (8) ein Einlaßventil (7, 8) eines Druckregelventils bildet. Der aus dem Kolbenteil (5) und der Membran (10) bestehende Kolben (5, 10) weist eine obere konstante Wirkfläche und eine mit der Bewegung des Kolbens (5, 10) veränderliche untere Wirkfläche (21) auf. Von der oberen Wirkfläche wird eine erste Steuerkammer (2) begrenzt, die mit einem Druckmittelanschluß (3), für z.B. Bremsdrucksteuermittel, verbunden ist.

Auf der der ersten Steuerkammer (2) abgewandten Seite des Kolbens (5, 10) ist ein Relaiskolben (12) mittels eines Dichtringes abgedichtet verschiebbar angeordnet. Vom Relaiskolben (12) und der Membran (10) wird eine als zweite Steuerkammer dienende Kammer (11) begrenzt.

Der Relaiskolben (12) weist auf seiner der zweiten Steuerkammer (11) zugewandten Seite einen koaxial zum Kolben (5, 10) angeordneten rohrförmigen Fortsatz (20) auf, der in dem als Hohlkörper ausgebildeten Kolbenteil (5) des Kolbens (5, 10) geführt wird. Der rohrförmige Fortsatz (20) des Relaiskolbens (12) erstreckt sich durch den Relaiskolben (12) hindurch in eine vom Relaiskolben (12) begrenzte Arbeitskammer (13) hinein, die auf der der zweiten Steuerkammer (11) abgewandten Seite des Relaiskolbens (12) gelegen ist.

Von dem in der Arbeitskammer (13) gelegenen, als Ventilsitz (14) ausgebildeten Teil des rohrförmigen Fortsatzes (20) und einem in einer Gehäuseausnehmung abgedichtet geführten Doppelventilkörper (16) wird ein Auslaßventil (14, 16) gebildet. Ein ringförmiger Gehäuseeinsatz (17) ist in einer Gehäuseausnehmung konzentrisch zum Doppelventilkörper (16) angeordnet. Der Gehäuseeinsatz (17) ist als Ventilsitz (15) für ein aus dem Doppelventilkörper (16) und dem gehäusefesten Ventilsitz (15) bestehendes Einlaßventils (15, 16) ausgebildet. Mittels einer Feder wird der Doppelventilkörper (16) in Richtung auf den Ventilsitz (15) des Einlaßventils (15, 16) zu belastet.

Die über einen nicht dargestellten Druckmittelausgang mit einem Verbraucher, z.B. einem Bremszylinder, verbundene Arbeitskammer (13) ist über das Einlaßventil (15, 16) oder das Auslaßventil (14, 16) mit einer Druckmitteleingangskammer (19) oder mit der Atmosphäre verbindbar. Die Druckmitteleingangskammer (19) steht über einen nicht gezeigten Druckmitteleingang mit einem Druckmittel-Vorratsbehälter in Verbindung.

Ein hohler Stößel (18), der durch das kombinierte Einlaß- und Auslaßventil (14, 15, 16) und den rohrförmigen Fortsatz (20) des Relaiskolbens (12) hindurchgeführt ist, ist an seinem dem am ersten Kolbenteil (5) angeordneten Ventilkörper (7) zugewandten Ende als Ventilsitz (9) ausgebildet und bildet mit dem Ventilkörper (7) ein Einlaßventil (7, 9) des Druckregelventils (7, 9, 8).

Der hohle Stößel (18) stellt die lastabhängig verstellbare Verbindung zwischen dem als Bremsdruckregelventil dienenden Druckregelventil (7, 9, 8) und einem Steuerteil her. Das dem Druckregelventil (7, 8; 9) abgewandte Ende des hohlen Stößels (18) steht zu diesem Zweck mit einer nicht dargestellten Steuerkurve in Wirkverbindung.

Auf der der zweiten Steuerkammer (11) abgewandten Seite der Membran (10) sind an einem im Gehäuse (1) ortsfest angeordneten ringförmigen Träger (24) sich radial nach innen aufeinander zu erstreckende Stützglieder (23) angeordnet, deren der Membran (10) zugewandte Stirnflächen (22) Teile eines Kegelmantels bilden. In der in der Zeichnung dargestellten Stellung des Kolbens (5, 10) liegt die Membran (10) an diesen Stirnflächen (22) an.

An dem als ein weiterer ringförmiger Träger dienenden Kolbenteil (5) sind sich radial nach außen, vom Träger weg erstreckende Stützglieder (25) angeordnet, deren der Membran (10) zugewandte Stirnflächen (26) Teile eines entgegengerichteten Kegelmantels bilden.

Die an dem ortsfest angeordneten Träger (24) befestigten Stützglieder (23) bilden ein erstes Stützelement (24, 23) und die mit dem als Kolbenteil (5) ausgebildeten Träger verbundenen Stützglieder (25) bilden ein zweites Stützelement (5, 25). Die ortsfest im Gehäuse (1) angeordneten Stützglieder (23) können Bestandteil des Gehäuses (1) sein.

Das erste Stützelement (24, 23) und das zweite Stützelement (5, 25) sind koaxial zueinander angeordnet und so ausgebildet daß sie in Richtung der Längsachse der Kolbeneinrichtung relativ zueinander bewegbar sind, wobei die Stützglieder (25) des jeweils einen Stützelementes (5, 25) in Zwischenräume zwischen den Stützgliedern (23) des jeweils anderen Stützelementes (24, 23) eintauchen bzw. wenigstens teilweise aus diesen austreten, um die aus den beiden Stützelementen (5, 25) und (24, 23) bestehende Membranabstützung (5, 25, 24, 23) im Sinne einer Änderung der Wirkfläche (21) der Membran (10) zu variieren.

Die ortsfest angeordneten Stützglieder (23) weisen in ihrem sich radial nach innen erstreckenden freien Endbereich eine sich von der Membran (10) weg erstreckende ansteigende Kurvenform auf.

In Fig. 2 ist eine Draufsicht auf die beiden Stützelemente (5, 25) und (23, 24) dargestellt. Der besseren Übersicht halber sind die den in Fig. 1 gezeigten Bauteilen gleichen Bauteile mit gleichen Bezugsziffern versehen.

An einem ringförmigen Träger (24), der wie in Fig. 1 dargestellt, ortsfest im Gehäuse (1) angeordnet ist, sind im gleichen Abstand zueinander eine Anzahl sich radial nach innen erstreckender Stützglieder (23) vorgesehen. Die Stützglieder (23) sind in ihrer Länge so bemessen, daß ihre freien Enden eine Begrenzung für eine kreisförmige Öffnung (27) bilden.

An einem ringförmigen Träger (5) (Kolbenteil 5 in Fig. 1), der mit seinem der Membran (10) zugewandten Teil innerhalb der kreisförmigen Öffnung (27) gelegen ist, sind im gleichen Abstand zueinander eine Anzahl sich radial nach außen erstreckender Stützglieder (25) angeordnet.

Das aus dem Träger (24) und den Stützgliedern (23) bestehende erste Stützelement (24, 23) und das aus dem Träger (5) und den Stützgliedern (25) bestehende zweite Stützelement (5, 25) sind so zueinander angeordnet, daß die Stützglieder (25) des zweiten Stützelementes (5, 25) in die von den Stützgliedern (23) des ersten Stützelementes (24, 23) begrenzten Schlitze eingreifen und umgekehrt die Stützglieder (23) des ersten Stützelementes (24, 23) in die von den Stützgliedern (25) begrenzten Schlitze des zweiten Stützelementes (5, 25) eingreifen.

Wie aus der Fig. 2 ersichtlich ist, nimmt der Abstand (a) bis (b) zwischen den einander zugewandten Seiten von jeweils zwei benachbarten Stützgliedern (25) des zweiten Stützelementes (5, 25), ausgehend vom Träger (5) für die Stützglieder (25) des zweiten Stützelementes (5, 25), mit zunehmender Länge (zunehmendem Durchmesser des zweiten Stützelementes 5, 25 und somit auch zunehmendem Durchmesser des ersten Stützelementes 24, 23 sowie der zugehörigen abzustützenden Membran) der Stützglieder (25) zu.

Das hat den Nachteil, daß, wie bereits eingangs erwähnt, bei einer Relativbewegung der beiden Stützelemente (5, 25) und (24, 23) zueinander (in Richtung der Längsachse der Träger 5 und 23), wobei das zweite Stützelement (5, 25) auf die Membran (10) zu bewegt wird, die Membran (10) durch den Druck in der zweiten Steuerkammer (11) (Fig. 1) beim zur Anlagebringen der Stützglieder (25) des zweiten Stützelementes (5, 25) an der Membran (10) und beim Abheben der Membran (10) mittels der Stützglieder (25) von den Stützgliedern (23) des ersten stützelementes (24, 23) zwischen den Stützgliedern (25) des zweiten Stützelementes (5, 25) ausbeult und so weiterhin zu einem Teil an den Stützgliedern (23) des ersten Stützelementes (23, 24) anliegt.
Die Folge ist, daß bei einem bestimmten Hub des Kolbenteiles (5) (Träger 5 des zweiten Stützelementes 5, 25) die für diesen Hub gewünschte Vergrößerung der vom Steuerdruck in der zweiten Steuerkammer (11) beaufschlagten Wirkfläche (21) des Kolbens (5, 10) nicht erreicht wird.

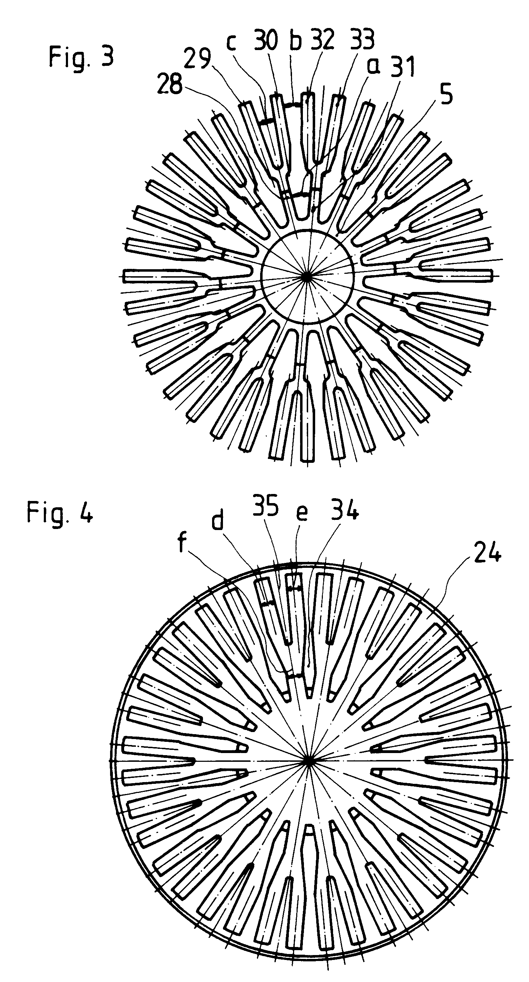

In den Figuren 3, 4 und 5 ist eine Membranabstützung dargestellt, bei welcher die Stützglieder der Stützelemente so ausgebildet sind, daß ein Ausbeulen der Membran weitestgehend verhindert wird.

Der besseren Übersicht halber sind die den in Fig. 1 gezeigten Bauteilen gleichen Bauteile mit gleichen Bezugszeichen versehen.

Gemäß Fig. 3 sind an dem Träger (5) eines zweiten Stützelementes sich radial nach außen erstreckende Stützglieder (28, 29, 30) angeordnet. Jedes Stützglied (28, 29, 30) weist die Form eines Ypsilons auf, und setzt sich aus einem halsförmigen Teil (28) und zwei an dieses anschließenden Schenkeln (29) und (30) zusammen. Das Y-förmige Stützglied (28, 29, 30) ist mit seinem halsförmigen Teil (28) an dem ringförmigen Träger (5) angeordnet, so daß sich die freien Schenkel (29, 30) im wesentlichen radial nach außen erstrecken. Der Winkel zwischen den Schenkeln (29, 30) eines Stützgliedes (28, 29, 30) und der Winkel zwischen den einander zugewandten Seiten der Schenkel (30, 32) von zwei benachbart zueinander angeordneten Stützgliedern (28, 29, 30) und (31, 32, 33) ist so bemessen, daß der Abstand (c) zwischen den einander zugewandten Seiten der Schenkel (29, 30) bzw. (32, 33) eines jeden Stützgliedes (28, 29, 30) und (31, 32, 33) und auch der Abstand (b) zwischen den einander zugewandten Seiten der Schenkel (30, 32) von zwei benachbart zueinander angeordneten Stützgliedern (28, 29, 30) und (31, 32, 33) über den überwiegenden Teil der axialen Erstreckung der Stützglieder (28, 29, 30) und (31, 32, 33) annähernd gleich ist.

Der halsförmige Teil (28) bzw. (31) eines jeden Stützgliedes (28, 29, 30) und (31, 32, 33) ist so ausgebildet und so bemessen, daß der Abstand (a) zwischen den einander zugewandten Seiten der halsförmigen Teile (28) bzw. (31) von zwei benachbart zueinander angeordneten Stützgliedern (28, 29, 30) und (31, 32, 33) annähernd gleich ist dem Abstand (c) zwischen den einander zugewandten Seiten der Schenkel (30, 32) von zwei benachbart zueinander angeordneten Stützgliedern (28, 29, 30) und (31, 32, 33) sowie auch annähernd gleich ist dem Abstand (c) zwischen den einander zugewandten Seiten von zwei Schenkeln (29, 30) bzw. (32, 33) eines Stützgliedes (28, 29, 30) bzw. (31, 32, 33).

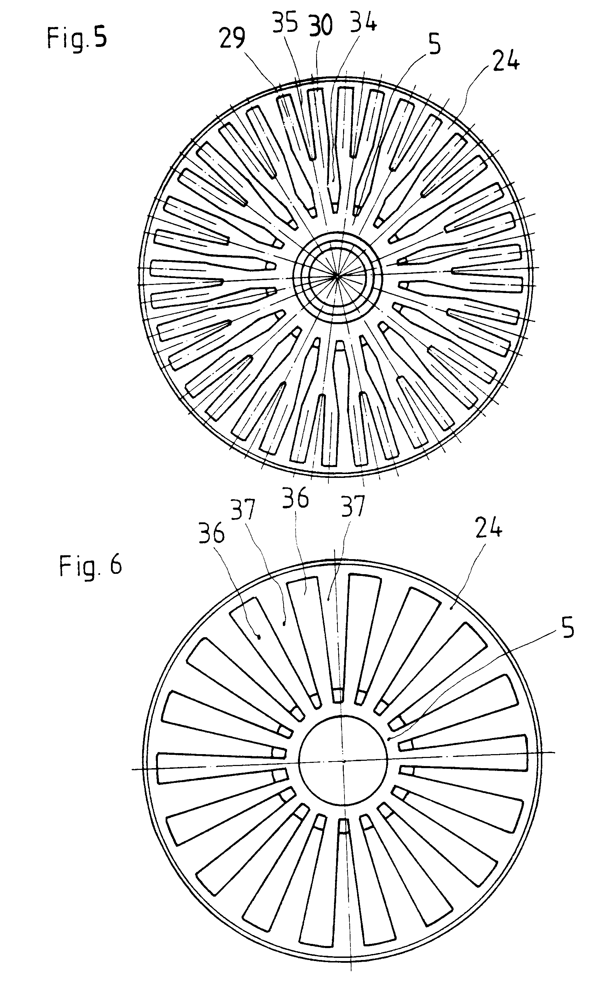

Fig. 4 zeigt das erste Stützelement, welches mit dem in Fig. 3 gezeigten zweiten Stützelement eine Membranabstützung bildet. An einem ringförmigen Träger (24) sind sich radial nach innen erstreckende Stützglieder (34) und (35) angeordnet. Je zwei benachbart zueinander angeordnete Stützglieder weisen unterschiedliche Formen und Längen auf.

Das jeweils eine Stützglied (34) weist eine Form auf, die dem freien Raum zwischen Zwei Stützgliedern (30, 32) des zweiten Stützelementes nach Fig. 3 angepaßt ist. Das jeweils andere Stützglied (35) weist eine Form auf, die dem freien Raum zwischen zwei Schenkeln (29, 30) eines Stützgliedes (28, 29, 30) nach Fig. 3 angepaßt ist.

Das in Fig. 4 gezeigte erste Stützelement kann aber auch als eine ringförmige Scheibe (24) mit Y-förmig ausgebildeten Ausnehmungen (d, e und f) betrachtet werden, wobei die ringförmige Scheibe (24) mit den Y-förmigen Ausnehmungen (d, e, f) eine Negativform für das die Y-förmigen Stützglieder (28, 29, 30) und (31, 32, 33) aufweisende zweite Stützelement nach Fig. 3 darstellt.

Die Abstände (d, e und f) zwischen den einander zugewandten Seiten der Stützglieder (34) und (35) sind über den überwiegenden Teil der axialen Erstreckung der Stützglieder (34, 35) zumindest auf der der Membran zugewandten Seite annähernd gleich. Dies trifft natürlich, wie vorstehend erwähnt, auch für das zweite Stützelement nach Fig. 3 zu (Abstände a, b, c).

Fig. 5 zeigt das erste Stützelement nach Fig. 4 und das zweite Stützelement nach Fig. 3 im zusammengefügten Zustand.

Die Stützglieder des ersten Stützelementes sind wie in Fig. 4 mit den Bezugsziffern (34) und (35) und die Stützglieder des zweiten Stützelementes sind wie in Fig. 3 mit den Bezugsziffern (28, 29, 30) bezeichnet. Der Träger für das erste Stützelement weist die Bezugsziffer (24) auf und der Träger für das zweite Stützelement hat die Bezugsziffer (5).

In Fig. 6 ist eine aus zwei Stützelementen bestehende Membranabstützung dargestellt, bei welcher die Stützglieder des zweiten Stützelementes eine leichte Keilform aufweisen, wobei die Keilform nur sehr schwach ausgebildet ist um den Abstand zwischen den Seiten von je zwei benachbart zueinander angeordneten Stützgliedern über den überwiegenden Teil der axialen Erstreckung der Stützglieder annähernd konstant zu halten.

Der besseren Übersicht halber und um den Bezug zu Fig. 1 herzustellen, sind die Träger für die Stützglieder der Stützelemente mit den in Fig. 1 verwendeten Bezugszeichen gleichen Bezugszeichen versehen.

An einem ringförmigen Träger (5) sind im gleichen Abstand zueinander Stützglieder (36) fest angeordnet, die sich radial nach außen erstrecken. Jedes Stützglied (36) weist eine leichte Keilform auf und ist so am Träger (5) angeordnet, daß seine Anlagefläche für die Membran sich in Richtung auf den Träger (5) zu leicht verjüngt. Der Abstand zwischen den einander zugewandten Seiten von zwei benachbart zueinander angeordneten Stützgliedern (36) wird auf diese Art und Weise über den überwiegenden Teil der axialen Erstreckung der Stützglieder (36) annähernd gleich gehalten.

Das mit diesem Stützelement zusammenwirkende Stützelement besteht aus einem ringförmigen Träger (24), an dem sich radial nach innen erstreckende Stützglieder (37) fest angeordnet sind. Die Stützglieder (37) dieses Stützelementes weisen ebenfalls eine leichte Keilform auf und sind so angeordnet, daß ihre Anlageflächen für die Membran sich in Richtung auf ihren freien Endbereich zu leicht verjüngen.

Wie auch die Stützelemente gemäß den vorstehend beschriebenen Membranabstützungen greifen die Stützglieder des jeweils einen Stützelementes in die entsprechenden freien Räume zwischen den Stützgliedern des jeweils anderen Stützelementes, vorzugsweise berührungslos, ein.

Nachstehend soll unter Einbeziehung der Fig. 1 nocheinmal kurz die Funktion der Kolbeneinrichtung nach den Fig. 3 bis 5 in einer Bremskraftregeleinrichtung erläutert werden.

In der in Fig. 1 gezeigten Stellung der Bremskraftregeleinrichtung sind die erste Steuerkammer (2), die zweite Steuerkammer (11) und die Arbeitskammer (13) drucklos. In der Druckmitteleingangskammer (19) steht Druckmittel aus einem Druckmittel-Vorratsbehälter an. Der als Regelkolben dienende Kolben (5, 10) befindet sich in seiner oberen Endlage und die Membran (10) des Kolbens (5, 10) liegt an der von den Stützgliedern (23) gebildeten Stützfläche (21) des ortsfest im Gehäuse (1) angeordneten ersten Stützelementes (24, 23) der Kolbeneinrichtung (5, 10, 24, 23, 25) an. Das als Einlaßventil (8, 7) der als Druckregelventil ausgebildeten Ventileinrichtung (8, 7, 9) ist geschlossen und das zugehörige Auslaßventil (9, 7) befindet sich in der Offenstellung.

Wird über den Steueranschluß (3) Steuerdruckmittel, beispielsweise von einem Bremsventil, in die erste Steuerkammer (2) eingesteuert, so wird die konstante Ringfläche des die erste Steuerkammer (2) begrenzenden Kolbenteiles (5) mit Steuerdruckmittel beaufschlagt. Durch die Kraft des sich in der ersten Steuerkammer (2) aufbauenden Steuerdruckes wird das Kolbenteil (5) nach unten, in Richtung auf die zweite Steuerkammer (11) zu bewegt.

Die mit dem Kolbenteil (5) fest verbundenen Stützglieder (25) tauchen dabei tiefer in die freien Räume zwischen den Stützgliedern (23) des ersten Stützelementes (24, 23) ein. Die von der der Membran (10) zugewandten Seite der Stützglieder des zweiten Stützelementes (5, 25) gebildete Stützfläche (26) kommt dabei mit ihrem dicht am Kolbenteil (5) gelegenen Bereich an der Membran (10) zur Anlage.

Bei der weiteren Abwärtsbewegung des Kolbenteiles (5) wird der Anteil der Stützfläche (26), welcher mit der Membran (10) in Berührung kommt, zunehmend größer. Das bedeutet, daß auch die von der Membran (10) und den Stützgliedern der beiden Stützelemente gebildete veränderbare untere Wirkfläche (21) des Kolbens (5, 10) der Kolbeneinrichtung (5, 10, 24, 23, 25) zunehmend größer wird.

Das Auslaßventil (9, 7) gelangt in die Schließstellung und das Einlaßventil (8, 7) wird geöffnet. Von der ersten Steuerkammer (2) gelangt Steuerdruckmittel durch das geöffnete Einlaßventil (8, 7) und den Spalt zwischen der Mantelfläche des Fortsatzes des Relaiskolbens (12) und der Innenwand des rohrförmig ausgebildeten Kolbenteiles (5) in die zweite Steuerkammer (11).

Der sich in der zweiten Steuerkammer (11) aufbauende Steuerdruck bewirkt eine Verschiebebewegung des Relaiskolbens (12) in Schließrichtung des vom Relaiskolben (12) betätigbaren Auslaßventils (14, 16) und in Öffnungsrichtung des Einlaßventils (15, 16). Das Auslaßventil (14, 16) gelangt in die Schließstellung und das Einlaßventil (15, 15) gelangt in die Offenstellung.

Von der Druckmitteleingangskammer (19) strömt Druckmittel in die Arbeitskammer (13) und von dieser weiter durch einen Druckmittelausgang zu einem Verbraucher, wie z.B. Bremszylinder.

Der Arbeitsdruck in der Arbeitskammer (13) wirkt der Kraft des Steuerdruckes in der zweiten Steuerkammer (11) entgegengerichtet auf den Relaiskolben (12) ein.

Hat der Steuerdruck in der zweiten Steuerkammer (11) eine Höhe erreicht, die im Zusammenwirken mit der sich zunehmend vergrößernden Wirkfläche der die zweite Steuerkammer (11) begrenzenden Membran (10) ausreicht, um auf den Kolben (5, 10) eine Kraft auszuüben, die gleich ist der Kraft, die vom Steuerdruck in der ersten Steuerkammer (2) auf die konstante Wirkfläche des Kolbenteiles (5) ausgeübt wird, so wird der Kolben (5, 10) nach oben, in Richtung auf die erste Steuerkammer (2) zu verschoben. Das Einlaßventil (7, 8) des Druckregelventils (7, 8, 9) gelangt in die Schließstellung.

In gleicher Weise wird bei Erreichen einer bestimmten Höhe des Arbeitsdruckes in der Arbeitskammer (13) der Relaiskolben (12) nach oben, in Richtung auf die zweite Steuerkammer (11) zu verschoben und das dem Relaiskolben (12) zugeordnete Einlaßventil (15, 16) gelangt in die Schließstellung. Eine Abschlußstellung ist erreicht.

Dadurch, daß der Abstand (a) zwischen den halsförmigen Teilen (28) und (31), sowie der Abstand (b) zwischen den einander zugewandten Seiten der Schenkel (30) und (32) von zwei benachbart angeordneten Stützgliedern (28, 29, 30) und (31, 32, 33) über den überwiegenden Teil der axialen Erstreckung der Stützglieder (28, 29, 30) und (31, 32, 33) annähernd konstant ist, d.h., sich mit zunehmender Länge der Stützelemente und zunehmendem Durchmesser der Membran nur geringfügig vergrößert, kann die Membran (10) sich auch nur geringfügig ausbeulen. Sie verbleibt in dem Bereich des zweiten Stützelementes (5, 25), welches bei einer Relativbewegung zwischen dem ersten Stützelement (24, 23) und dem zweiten Stützelement (5, 25) auf der der Membran (10) zugewandten Seite aus dem ersten Stützelement (24, 23) austritt, nicht mehr an der Anlagefläche (22) des ersten Stützelementes (24, 23).

Das hat zur Folge, daß die Flächenänderung an der Membran (10) annähernd linear zum Verstellhub des Kolbens (5, 10) erfolgt.

Mit einem gegenüber bekennten lastabhängigen Bremskraftregeleinrichtungen geringeren Hub des Kolbens (5, 10) kann mit der beschriebenen Kolbeneinrichtung eine genauere und feiner abstufbare Bremsdruckregelung durchgeführt werden.

Die beanspruchte Kolbeneinrichtung ist in jeder Steuer- oder auch Regelventileinrichtung einsetzbar. Dabei kann die Kolbeneinrichtung selbst die Funktion eines Relaiskolbens haben. In einem solchen Fall würde die im Ausführungsbeispiel als zweite Steuerkammer dienende Druckmittelkammer die Funktion einer Arbeitskammer haben, die mit einem Verbraucher verbunden ist.

Die Stützglieder der Stützelemente für die Membran können abweichend von den beschriebenen Formen jede beliebige andere Form aufweisen, z.B. eine Kurvenform.

Wesentlich ist, daß der Abstand zwischen den Stützgliedern des bewegbaren Stützelementes oder auch des ortsfest angeordneten Stützelementes über den überwiegenden Teil der axialen Erstreckung der Stützglieder annähernd gleich ist und/oder einem ein Eindringen der Membran zwischen die Stützglieder verhindernden Wert nicht übersteigt oder daß die Stützglieder des zweiten Stützelementes so ausgebildet sind, daß die an der Membran zur Anlage bringbare Abstützfläche des zweiten Stützelementes größer ist als die freien Räume zwischen den Stützgliedern des zweiten Stützelementes, so daß auch bei Verwendung von in ihrem Durchmesser sehr großen Membranen und Stützelementen ein starkes Ausbeulen und somit ein in Anlage verbleiben der ausbeulenden Membranteile an dem Bereich eines der Stützelemente, von welchem die Membran mittels des jeweils anderen Stützelementes abgehoben werden soll, weitestgehend verhindert wird.

**Patentansprüche**

1. Kolbeneinrichtung mit veränderbarer Wirkfläche, insbesondere für eine lastabhängige Bremskraftregeleinrichtung für Fahrzeugbremsanlagen, mit folgenden Merkmalen:

a) Es sind eine Membran (10) und eine Membranabstützung (5, 28, 29, 31, 30, 32, 33, 24, 34, 35) vorgesehen;

b) die Membranabstützung (5, 28, 29, 30, 31, 32, 33, 24, 34, 35) setzt sich aus einem ersten Stützelement (24, 34, 35) mit einer ersten Abstützfläche (22) für die Membran (10) und einem zweiten Stützelement (5, 28, 29, 30, 31, 32, 33) mit einer zweiten Stützfläche (26) für die Membran (10) zusammen;

c) das erste Stützelement (24, 34, 35) besteht aus Stützgliedern (34, 35) die an einem ortsfest angeordneten ringförmigen Träger (24) angeordnet sind und sich radial nach innen erstrecken, wobei ihre der Membran (10) zugewandten Seiten die erste Stützfläche (22) für die Membran (10) bilden;

d) das zweite Stützelement (5, 28, 29, 30, 31, 32, 33) besteht aus Stützgliedern (28, 29, 30, 31, 32, 33), die an einem weiteren ringförmigen Träger (5) angeordnet sind und sich radial nach außen vom Träger (5) weg erstrecken, wobei ihre der Membran (10) zugewandten Seiten die zweite Stützfläche (26) für die Membran (10) bilden;

e) das erste Stützelement (24, 34, 35) und das zweite Stützelement (5, 28, 29, 30, 31, 32, 33) sind koaxial zueinander angeordnet und so ausgebildet, daß die Stützglieder des einen Stützelementes in Zwischenräume zwischen den Stützgliedern des anderen Stützelementes eintauchen und daß die Stützelemente in Richtung der Längsachse der Kolbeneinrichtung relativ zueinander bewegbar sind, um die Membranabstützung (5, 28, 29, 30, 31, 32, 33, 24, 34, 35) im Sinne einer Veränderung der Wirkfläche der Membran (10) zu variieren;

dadurch gekennzeichnet, daß wenigstens das bewegbare zweite Stützelement (5, 28, 29, 30, 31, 32, 33) so ausgebildet ist, daß der Abstand zwischen je zwei benachbarten Stützgliedern (28, 29, 30 bzw. 31, 32, 33) dieses Stützelementes (5, 28, 29, 30, 31, 32, 33) wenigstens auf der der Membran (10) zugewandten Seite des Stützelementes (5, 28, 29, 30, 31, 32, 33) über den überwiegenden Teil der radialen Erstreckung der Stützglieder (28, 29, 30, bzw. 31, 32, 33) gleich oder annähernd gleich ist, so daß ein Eindringen der Membran zwischen die Stützglieder verhindert wird.

2. Kolbeneinrichtung mit veränderbarer Wirkfläche, insbesondere für eine lastabhängige Bremskraftregeleinrichtung für Fahrzeugbremsanlagen, mit folgenden Merkmalen:

a) Es sind eine Membran (10) und eine Membranabstützung (5, 25, 24, 23) vorgesehen;

b) die Membranabstützung (5, 25, 24, 23) setzt sich aus einem ersten Stützelement (24, 23) mit einer ersten Stützfläche (22) für die Membran (10) und einem zweiten Stützelement (5, 25) mit einer zweiten Stützfläche (26) für die Membran (10) zusammen;

c) das erste Stützelement (24, 23) besteht aus Stützgliedern (23), die an einem ortsfest angeordneten ringförmigen Träger (24) angeordnet sind und sich radial nach innen aufeinander zu erstrecken, wobei ihre der Membran (10) zugewandte Seite die erste Stützfläche (22) für die Membran (10) bildet;

d) das zweite Stützelement (5, 25) besteht aus Stützgliedern (25), die an einem weiteren ringförmigen Träger (5) angeordnet sind und sich radial nach außen vom Träger (5) weg erstrecken, wobei ihre der Membran (10) zugewandten Seiten die zweite Stützfläche (26) für die Membran (10) bilden;

e) das erste Stützelement (24, 23) und das zweite Stützelement (5, 25) sind koaxial zueinander angeordnet und so ausgebildet, daß die Stützglieder des einen Stützelementes in Zwischenräume zwischen den Stützgliedern des anderen Stützelementes eintauchen und daß die Stützelemente in Richtung der Längsachse der Kolbeneinrichtung relativ zueinander bewegbar sind, um die Membranabstützung (5, 25, 24, 23) im Sinne einer Veränderung der Wirkfläche der Membran (10) zu variieren;

dadurch gekennzeichnet, daß die Stützglieder (25) des zweiten Stützelementes (5, 25) so ausgebildet sind, daß die an der Membran (10) zur Anlage bringbare Stützfläche (26) des zweiten Stützelementes (5, 25) über den gesamten Verlauf des Hubes des zweiten Stützelementes (5, 25) größer ist als die freien Räume zwischen den Stützgliedern (25) des zweiten Stützelementes (5, 25).

3. Kolbeneinrichtung nach wenigstens einem der vorhergehenden Ansprüche, gekennzeichnet durch die folgenden Merkmale:
a) Die Stützglieder (28, 29, 30 bzw. 31, 32, 33) des zweiten Stützelementes (5, 25) weisen quer zur Längsachse der Kolbeneinrichtung einen Y-förmig ausgebildeten Querschnitt auf.
b) die y-förmigen Stützglieder (28, 29, 30) bzw. (31, 32, 33) weisen einen halsförmigen Teil (28 bzw. 31) auf, mit welchem sie am Träger (5) befestigt sind und erstrecken sich mit ihrem an den halsförmigen Teil anschließenden Schenkeln (29, 30 bzw. 32, 33) im wesentlichen radial nach außen vom Träger (5) weg;
c) die Stützglieder (35) bzw. (34) des ersten Stützelementes (24, 35, 34) erstrecken sich vom Träger (24) ausgehend radial nach innen aufeinander zu und sind so ausgebildet und so zueinander angeordnet, daß sie Y-Form aufweisende freie Räume des ersten Stützelementes (24, 35, 34) begrenzen, in welche die y-förmigen Stützglieder (28, 29, 30) bzw. (31, 32, 33) des zweiten Stützelementes (5, 28, 29, 30) bzw. (5, 31, 32, 33) eintauchen.

4. Kolbeneinrichtung nach wenigstens einem der vorhergehenden Ansprüche, gekennzeichnet durch die folgenden Merkmale:
a) Die Stützglieder (36) des zweiten Stützelementes (5, 36) sind keilförmig ausgebildet, wobei die Stützglieder (36), ausgehend vom Träger (5),sich zu ihrem freien Ende hin erweitern;
b) die Stützglieder (37) des ersten Stützelementes (24, 37) sind keilförmig ausgebildet, wobei sich die Stützglieder vom Träger (23) ausgehend zu ihrem freien Ende hin verjüngen.

**Claims**

1. A piston arrangement with variable effective area, in particular for a load-controlled brake force regulator for vehicle brake systems, having the following features:
a) a diaphragm (10) and a diaphragm support (5, 28, 29, 31, 30, 32, 33, 24, 34, 35) are provided;
b) the diaphragm support (5, 28, 29, 30, 31, 32, 33, 24, 34, 35) consists of a first supporting element (24, 34, 35) with a first supporting face (22) for the diaphragm (10) and a second supporting element (5, 28, 29, 30, 31, 32, 33) with a second supporting face (26) for the diaphragm (10);
c) the first supporting element (24, 34, 35) consists of supporting members (34, 35) which are arranged on a fixedly arranged ring-shaped carrier (24) and extend radially inwards, their sides facing towards the diaphragm (10) forming the first supporting face (22) for the diaphragm (10);
d) the second supporting element (5, 28, 29, 30, 31, 32, 33) consists of supporting members (28, 29, 30, 31, 32, 33) which are arranged on a further ring-shaped carrier (5) and extend radially outwards away from the carrier (5), their sides facing towards the diaphragm (10) forming the second supporting face (26) for the diaphragm (10);
e) the first supporting element (24, 34, 35) and the second supporting element (5, 28, 29, 30, 31, 32, 33) are arranged coaxially with respect to one another and are constructed so that the supporting members of the one supporting element enter gaps between the supporting members of the other supporting element and that the supporting elements are movable relative to one another in the direction of the longitudinal axis of the piston arrangement in order to vary the diaphragm support (5, 28, 29, 30, 31, 32, 33, 24, 34, 35) so that the effective area of the diaphragm (10) is varied;
characterized in that at least the movable second supporting element (5, 28, 29, 30, 31, 32, 33) is constructed so that the distance between two adjacent supporting members (28, 29, 30 and 31, 32, 33) of this supporting element (5, 28, 29, 30, 31, 32, 33), at least on the side of the supporting element (5, 28, 29, 30, 31, 32, 33) facing towards the diaphragm (10), is the same or approximately the same across the major part of the radial extent of the supporting members (28, 29, 30 and 31, 32, 33) so that the diaphragm is prevented from entering between the supporting members.

2. A piston arrangement with variable effective area, in particular for a load-controlled brake force regulator for vehicle brake systems, having the following features:

a) a diaphragm (10) and a diaphragm support (5, 25, 24, 23) are provided;

b) the diaphragm support (5, 25, 24, 23) consists of a first supporting element (24, 23) with a first supporting face (22) for the diaphragm (10) and a second supporting element (5, 25) with a second supporting face (26) for the diaphragm (10);

c) the first supporting element (24, 23) consists of supporting members (23) which are arranged on a fixedly arranged ring-shaped carrier (24) and extend radially inwards, their side facing towards the diaphragm (10) forming the first supporting face (22) for the diaphragm (10);

d) the second supporting element (5, 25) consists of supporting members (25) which are arranged on a further ring-shaped carrier (5) and extend radially outwards away from the carrier (5), their sides facing towards the diaphragm (10) forming the second supporting face (26) for the diaphragm (10);

e) the first supporting element (24, 23) and the second supporting element (5, 25) are arranged coaxially with respect to one another and are constructed so that the supporting members of the one supporting element enter gaps between the supporting members of the other supporting element and that the supporting elements are movable relative to one another in the direction of the longitudinal axis of the piston arrangement in order to vary the diaphragm support (5, 25, 24, 23) so that the effective area of the diaphragm (10) is varied;

characterized in that the supporting members (25) of the second supporting element (5, 25) are constructed so that the supporting face (26) of the second supporting element (5, 25) that is to be brought into engagement with the diaphragm (10) is larger for the entire course of the stroke of the second supporting element (5, 25) than the free spaces between the supporting members (25) of the second supporting element (5, 25).

3. A piston arrangement according to at least one of the preceding claims, characterized by the following features:

a) the supporting members (28, 29, 30 and 31, 32, 33) of the second supporting element (5, 25) have a Y-shaped cross-section transversely to the longitudinal axis of the piston arrangement;

b) the y-shaped supporting members (28, 29, 30) and (31, 32, 33) have a neck-shaped part (28 and 31 respectively) with which they are secured to the carrier (5), and with their arms (29, 30 and 32, 33 respectively) adjoining the neck-shaped part extend substantially radially outwards away from the carrier (5);

c) the supporting members (35) and (34) respectively of the first supporting element (24, 35, 34), starting from the carrier (24), extend radially inwards towards one another and are constructed and arranged relative to one another so that they bound free Y-shaped spaces of the first supporting element (24, 35, 34) in which the y-shaped supporting members (28, 29, 30) and (31, 32, 33) respectively of the second supporting element (5, 28, 29, 30) and (5, 31, 32, 33) respectively engage.

4. A piston arrangement according to at least one of the preceding claims, characterized by the following features:

a) the supporting members (36) of the second supporting element (5, 36) are of wedge-like construction, the supporting members (36), starting from the carrier (5), widening towards their free end;

b) the supporting members (37) of the first supporting element (24, 37) are of wedge-like construction, the supporting members, starting from the carrier (23), tapering towards their free end.

**Revendications**

1. Dispositif à piston comportant une surface active variable, notamment pour un dispositif de régulation de la force de freinage en fonction de la charge, destiné à des installations de freinage de véhicules, et présentant les caractéristiques suivantes:

a) il est prévu une membrane (10) et un appui de membrane (5, 28, 29, 30, 31, 32, 33 24, 34, 35);

b) l'appui de membrane (5, 28, 29, 30, 31, 32, 33, 24, 34, 35) se compose d'un premier élément d'appui (24, 34, 35) comportant une première surface d'appui (22) pour la membrane (10), et d'un second élément d'appui (5, 28, 29, 30, 31, 32, 33) comportant une seconde surface d'appui (26) pour la membrane (10);

c) le premier élément d'appui (24, 34, 35) est constitué par des organes d'appui (34, 35) qui sont disposés sur un support (24) de forme annulaire monté en position fixe, et qui s'étendent radialement vers l'intérieur, leurs côtés dirigés vers la membrane (10) formant la première surface d'appui (22) pour la membrane (10);

d) le second élément d'appui (5, 28, 29, 30, 31, 32, 33) est constitué d'organes d'appui (28, 29, 30, 31, 32, 33) qui sont disposés sur un autre support (5) de forme annulaire et qui s'étendent radialement vers l'extérieur en s'éloignant du support (5), leurs côtés dirigés vers la membrane (10) formant la seconde surface d'appui (26) pour la membrane (10);

e) le premier élément d'appui (24, 34, 35) et le second élément d'appui (5, 28, 29, 30, 31, 32, 33) sont disposés coaxialement l'un par rapport à l'autre et réalisés de telle sorte que les organes d'appui de l'un des éléments d'appui s'engagent dans des espaces intermédiaires entre les organes d'appui de l'autre élément d'appui, et que les éléments d'appui peuvent être déplacés relativement l'un par rapport à l'autre dans la direction de l'axe longitudinal du dispositif à piston, en vue de faire varier l'appui de membrane (5, 28, 29, 30, 31, 32, 33, 24, 34, 35) dans le sens d'une modification de la surface active de la membrane (10);

caractérisé en ce qu'au moins le second élément d'appui mobile (5, 28, 29, 30, 31, 32, 33) est réalisé de manière à ce que l'espacement entre deux organes d'appui respectivement voisins (28, 29, 30 et 31, 32, 33) de cet élément d'appui (5, 28, 29, 30, 31, 32, 33), au moins sur le côté de l'élément d'appui (5, 28, 29, 30, 31, 32, 33), dirigé vers la membrane (10), soit constant ou approximativement constant sur la plus grande partie de l'étendue radiale des organes d'appui (28, 29, 30 et 31, 32, 33) de sorte que l'on évite une pénétration de la membrane entre les organes d'appui.

2. Dispositif à piston comportant une surface active variable, notamment pour un dispositif de régulation de la force de freinage en fonction de la charge, destiné à des installations de freinage de véhicules, et présentant les caractéristiques suivantes:

a) il est prévu une membrane (10) et un appui de membrane (5, 25, 24, 23);

b) l'appui de membrane (5, 25, 24, 23) se compose d'un premier élément d'appui (24, 23) comportant une première surface d'appui (22) pour la membrane (10), et d'un second élément d'appui (5, 25) comportant une seconde surface d'appui (26) pour la membrane (10);

c) le premier élément d'appui (24, 23) est constitué par des organes d'appui (23) qui sont disposés sur un support (24) de forme annulaire, monté en position fixe, et qui s'étendent radialement vers l'intérieur les uns vers les autres, leur côté dirigé vers la membrane (10) formant la première surface d'appui (22) pour la membrane (10);

d) le second élément d'appui (5, 25) est constitué par des organes d'appui (25) qui sont disposés sur un autre support (5) de forme annulaire et qui s'étendent radialement vers l'extérieur en s'éloignant du support (5), leurs côtés dirigés vers la membrane (10) formant la seconde surface d'appui (26) pour la membrane (10);

e) le premier élément d'appui (24, 23) et le second élément d'appui (5, 25) sont disposés coaxialement l'un par rapport à l'autre et réalisés de telle sorte que les organes d'appui de l'un des éléments d'appui s'engagent dans des espaces intermédiaires entre les organes d'appui de l'autre élément d'appui, et que les éléments d'appui peuvent être déplacés relativement l'un par rapport à l'autre dans la direction de l'axe longitudinal du dispositif à piston, en vue de faire varier l'appui de membrane (5, 25, 24, 23) dans le sens d'une modification de la surface active de la membrane (10);

caractérisé en ce que les organes d'appui (25) du second élément d'appui (5, 25) sont réalisés de telle sorte que la surface d'appui (26) du second élément d'appui (5, 25), susceptible d'être appliquée contre la membrane (10), est plus grande que les espaces libres entre les organes d'appui (25) du second élément d'appui (5, 25), pendant le déroulement de la totalité de la course du second élément d'appui (5, 25).

3. Dispositif à piston selon l'une au moins des revendications précédentes, caractérisé par les particularités suivantes:

a) les organes d'appui (28, 29, 30 et 31, 32, 33) du second élément d'appui (5, 25) présentent, transversalement à l'axe longitudinal du dispositif à piston, une section droite en forme "Y";

b) les organes d'appui en forme de "Y" (28, 29, 30) et (31, 32, 33) comportent une partie en forme de col (28 et 31) par laquelle ils sont fixés au support (5), et s'étendent, avec leurs branches (29, 30 et 32, 33) se raccordant à la partie en forme de col, essentiellement de manière radiale vers l'extérieur, en s'éloignant du support (5);

c) les organes d'appui (35) et (34) du premier élément d'appui (24, 35, 34) s'étendent radialement vers l'intérieur, les uns vers les autres à partir du support (24), et sont réalisés et disposés les uns par rapport aux autres de manière à ce qu'ils délimitent des espaces libres en forme de "Y" du premier élément d'appui (24, 35, 34), dans lesquels s'engagent les organes d'appui en forme de "Y" (28, 29, 30) et (31, 32, 33) du second élément d'appui (5, 28, 29, 30) et (5, 31, 32, 33).

4.   Dispositif à piston selon l'une au moins des revendications précédentes, caractérisé par les particularités suivantes:

a) les organes d'appui (36) du second élément d'appui (5, 36) sont réalisés en forme de coin, les organes d'appui (36) s'élargissant en s'éloignant du support (5), en direction de leur extrémité libre;

b) les organes d'appui (37) du premier élément d'appui (24, 37) sont réalisés en forme de coin, les organes d'appui se rétrécissant en s'éloignant du support (23), en direction de leur extrémité libre.

FIG. 1

FIG. 2

Fig. 3

Fig. 4

Fig. 5

Fig. 6